# EUROPEAN PATENT APPLICATION

(11) **EP 1 195 536 A1**
(43) Date of publication of application: **10.04.2002**
(21) Application number: 01917544.7
(22) Date of filing: 28.03.2001
(51) Int. Cl.: F16D 7/10, F16F 15/133

(54) **POWER TRANSMISSION MECHANISM**

(30) Priority: 29.03.2000 JP 2000090296; 11.08.2000 JP 2000245371
(71) Applicant: Kabushiki Kaisha Toyota Jidoshokki, Kariya-shi, Aichi-ken 448-8671 (JP)
(72) Inventor: KIMURA, Kazuya c/o KK TOYOTA JIDOSHOKKI, Kariya-shi, Aichi 448-8671 (JP); URYU, Akifumi c/o KK TOYOTA JIDOSHOKKI, Kariya-shi, Aichi 448-8671 (JP); KAWAGUCHI, M., c/o KK TOYOTA JIDOSHOKKI, Kariya-shi, Aichi 448-8671 (JP); UMEMURA, S., c/o KK TOYOTA JIDOSHOKKI, Kariya-shi, Aichi 448-8671 (JP); OTA, Masaki, c/o KK TOYOTA JIDOSHOKKI, Kariya-shi, Aichi 448-8671 (JP); ADANIYA, Taku, c/o KK TOYOTA JIDOSHOKKI, Kariya-shi, Aichi 448-8671 (JP)
(74) Representative: Leson, Thomas Johannes Alois, Dipl.-Ing.
(86) International application number: JP0102566
(87) International publication number: WO0173309

(57) **Abstract**

A power transmission mechanism includes a first rotary body having an engagement recess, and a second rotary body, which is coaxial to the first rotary body, and an engagement projection. The position of at least one of the engagement recess and the engagement projection changes with respect to the associated rotary body. An elastic member elastically deforms in accordance with force based on a transmission torque during power transmission between the first rotary body and the second rotary body. The elastic deformation of the elastic member permits the position of at least one of the engagement recess and the engagement projection to be changed. Sliding of the engagement projection in the engagement recess permits relative rotation of the rotary bodies within a predetermined angle range.

## Description

### Technical Field

The present invention relates to a power transmission mechanism provided between a first rotary body and a second rotary body. More specifically, this invention relates to a power transmission mechanism that can reduce variation in transmission torque between the rotary bodies.

### Background Art

For example, Japanese Unexamined Patent Publication (KOKAI) No. Hei 11-30244 discloses a power transmission mechanism in which a rotary body of an external drive source and a rotary body of a driven machine are coupled by an elastic member, such as rubber. According to the power transmission mechanism, as the elastic member elastically deforms upon application of force based on a transmission torque during power transmission from the external drive source to the driven machine, relative rotation of the rotary bodies is permitted.

Even if the transmission torque between the rotary bodies varies due to a change in the output torque of the external drive source or a change in the drive torque of the driven machine, the variation in transmission torque is reduced by the relative rotation of the rotary bodies based on the elastic deformation of the elastic member.

According to the above-described art, however, reduction of transmission torque variation depends only on the elastic deformation of the elastic member. Therefore, variation in transmission torque cannot be reduced.

### Disclosure of the Invention

It is an object of the present invention to provide a power transmission mechanism that reduces transmission torque variation between a first rotary body and a second rotary body effectively.

To achieve the object, this invention provides the following power transmission mechanism. The power transmission mechanism includes a first rotary body, which has an engagement recess, and a second rotary body, which is coaxial to the first rotary body and has an engagement projection. The position of at least one of the engagement recess and the engagement projection is changed with respect to the associated rotary body. An elastic member elastically deforms in accordance with force based on the transmission torque during power transmission between the first rotary body and the second rotary body. The elastic deformation of the elastic member permits the position of at least one of the engagement recess and the engagement projection to be changed. Sliding of the engagement projection in the engagement recess permits relative rotation of the rotary bodies within a predetermined angle range.

### Brief Description of the Drawings

Fig. 1 is a cross-sectional view showing the outline of a compressor equipped with a power transmission mechanism according to this embodiment;
Fig. 2(a) is a front view of the power transmission mechanism in Fig. 1;
Fig. 2(b) is a cross-sectional view taken along the line 2b-2b in Fig. 2(a);
Fig. 3 is a diagram showing a power transmission member;
Fig. 4 is a partially enlarged view showing the action of the power transmission mechanism;
Fig. 5 is a partially enlarged view showing the action of the power transmission mechanism;
Fig. 6 is a partially enlarged view showing the action of the power transmission mechanism;
Fig. 7 is a front view of the power transmission mechanism with a connecting piece disengaged from an engagement recess and a hub;
Fig. 8 is a graph illustrating the relationship between a torque variation and the rotational speed of the compressor;
Fig. 9 is a diagram showing a power transmission mechanism according to a second embodiment in a power-transmittable state;
Fig. 10 is a diagram showing the power transmission mechanism in Fig. 9 whose power transmission is shut off;
Fig. 11 is a front view depicting a power transmission mechanism according to a third embodiment; and
Fig. 12 is a front view depicting a power transmission mechanism according to a fourth embodiment.

### Best Mode for Carrying Out the Invention

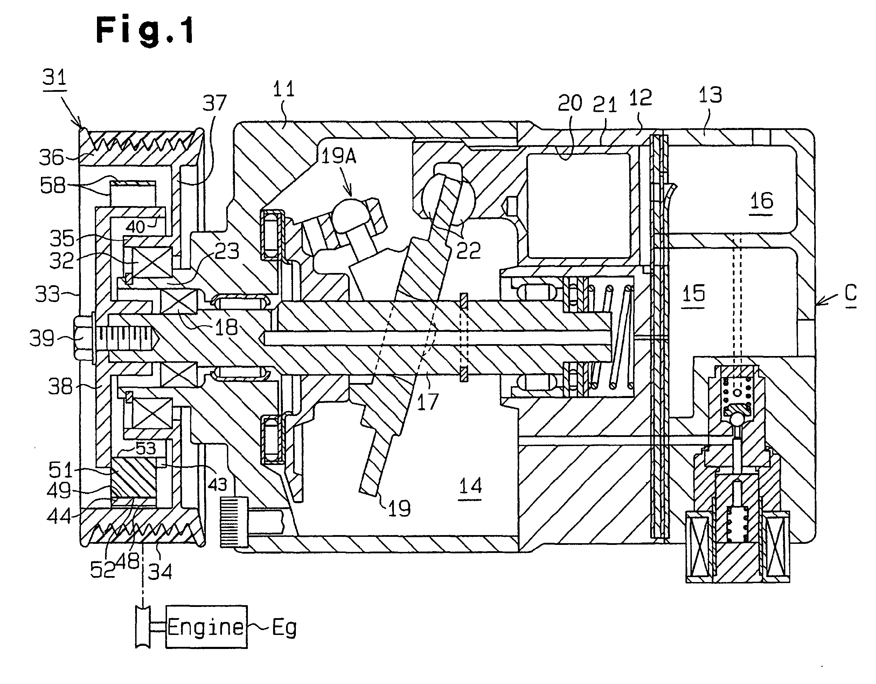

A first embodiment of the present invention as embodied in a power transmission mechanism that transmits power between a compressor of an air-conditioning system for a vehicle and an engine which drives the compressor is described with reference to Figs. 1 through 8. In Fig. 1, the left-hand side of the figure is frontward and the right-hand side is rearward.

As shown in Fig. 1, a compressor C as a driven machine has a cylinder block 12, a front housing 11 connected to the front end portion of the cylinder block 12 and a rear housing 13 connected to the rear end portion of the cylinder block 12. The front housing 11, the cylinder block 12 and the rear housing 13 form the housing of the compressor C. A crank chamber 14 is defined between the front housing 11 and the cylinder block 12. A suction chamber 15 and a discharge chamber 16 are defined between the cylinder block 12 and the rear housing 13.

A rotary shaft 17 is supported on the front housing 11 and the cylinder block 12. The front end portion of the rotary shaft 17 protrudes from an opening of the front housing 11. A shaft seal unit 18, which includes a lip seal, is provided on the rotary shaft 17. The shaft seal unit 18 seals the crank chamber 14. The rotary shaft 17 is coupled to an external drive source, or an engine Eg, via a power transmission mechanism 31 without a clutch mechanism, such as an electromagnetic clutch. The rotary shaft 17 is driven via the power transmission mechanism 31 when the engine Eg is running.

A swash plate 19 is coupled to the rotary shaft 17 in the crank chamber 14 via a hinge mechanism 19A such that the swash plate 19 and the hinge mechanism 19A rotate together. A plurality of cylinder bores 20 (only one shown in Fig. 1) are formed in the cylinder block 12. A single head piston 21 is retained in each cylinder bore 20 in a reciprocatable manner. One end of each piston 21 is coupled to the peripheral portion of the swash plate 19 via a pair of shoes 22. In each cylinder bore 20, the piston 21 reciprocates. The reciprocation of the piston 21 causes a refrigerant gas to be drawn into the cylinder bore 20 from the suction chamber 15. The refrigerant gas is compressed in the cylinder bore 20. The compressed refrigerant gas is discharged from the cylinder bore 20 to the discharge chamber 16.

The power transmission mechanism 31 is described below.

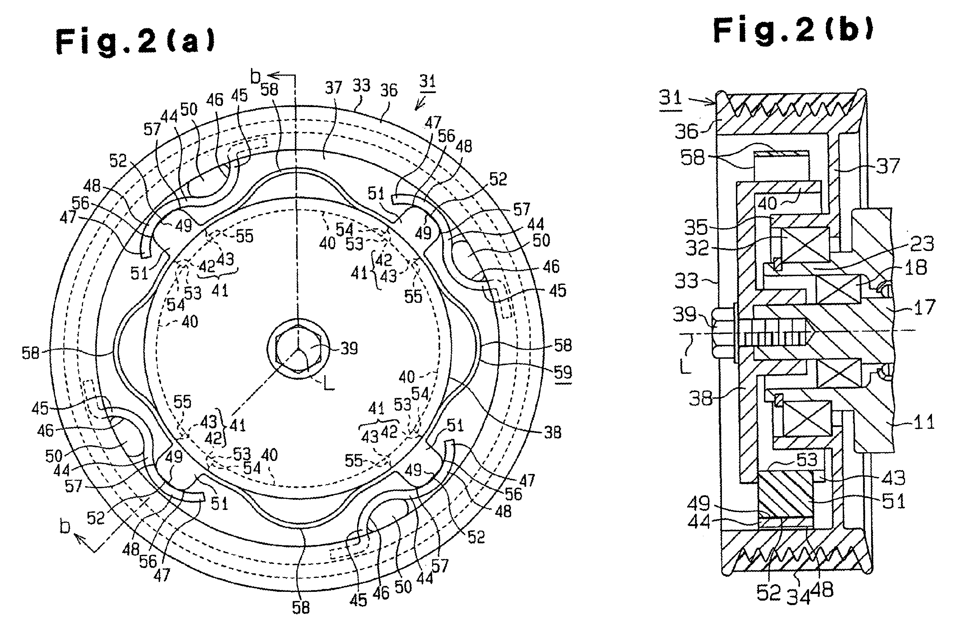

As shown in Figs. 1 and 2(b), a support cylinder 23 is provided at the front end portion of the front housing 11. An angular bearing 32 is provided around the support cylinder 23. A pulley 33, or a first rotary body, is rotatably supported on the support cylinder 23 by the angular bearing 32. The pulley 33 is coupled to the engine Eg by a power transmission belt 34, such as a V belt.

The pulley 33 has a boss 35 which is attached to the outer ring of the angular bearing 32, an outer ring 36 around which the belt 34 is wrapped, and a disc portion 37, which connects the boss 35 to the outer ring 36.

A hub 38, or a second rotary body, is fixed to the front end portion of the rotary shaft 17 by a bolt 39 such that the hub 38 and the shaft 17 rotate together. An inner ring 40, which is concentric to the outer ring 36 and has a smaller diameter than the outer ring 36, is provided at the periphery of the hub 38. As shown in Fig. 2(a), a second engagement portion, or four slots 41, are provided in the inner ring 40 at intervals of 90° around the axis of the rotary shaft 17. Each slot 41 has inner side surfaces 42 and 43, which are parallel to each other and are flat. An imaginary plane that is positioned between the side surfaces 42 and 43 and is parallel to the side surfaces 42 and 43 includes the axis of the hub 38. The inner periphery of the outer ring 36 and the outer periphery of the inner ring 40 are both circular are centered on the axis L of the rotary shaft 17.

Four power transmission springs 44, which serve as first engagement portions, are provided between the outer ring 36 and the inner ring 40 at intervals of 90° around the axis L. A proximal end 45 of the power transmission spring 44, which is a leading end when the pulley 33 rotates(in the clockwise direction of Fig. 2(a)), is fixed to the outer ring 36 so that the entire power transmission spring 44 is attached to the outer ring 36 in a cantilever fashion. The power transmission spring 44 has a wave shape.

The power transmission spring 44 has a crest 46 and a trough 48, both of which have nearly arcuate shapes. The crest 46 extends toward the inner ring 40 and the trough 46 extends toward the outer ring 36. A rubber damper 50 is retained between the crest 46 and the inner surface of the outer ring 36. The rubber damper 50 abuts against both the power transmission spring 44 and the outer ring 36.

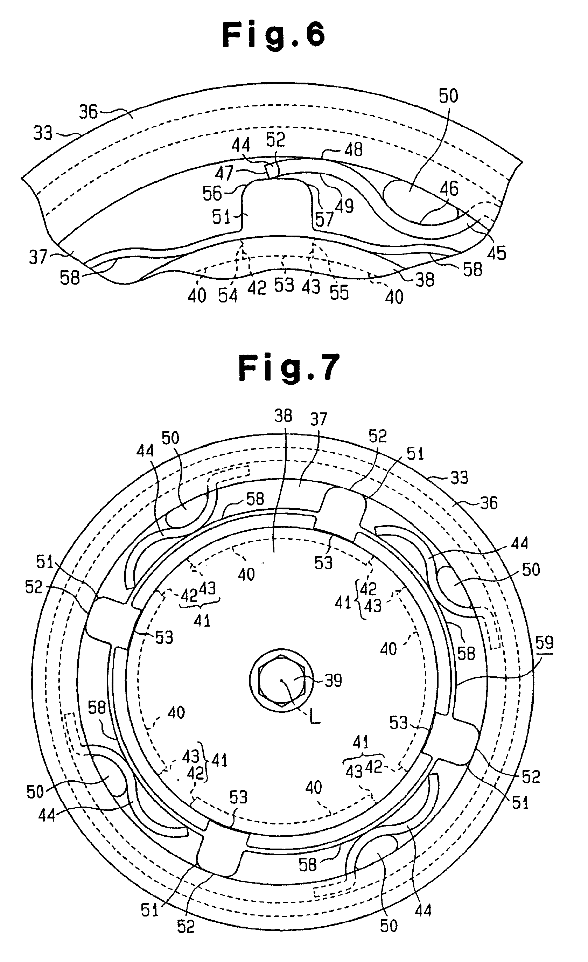

The trough 48 of the power transmission spring 44 has a recess 49 facing the hub 38. When an outward radial force is applied to the power transmission spring 44 from the center of the pulley 33 at a distal end 47 of the power transmission spring 44, the power transmission spring 44 elastically deforms, and the proximal end 45 is a point of support. As shown in Fig. 6, the elastic deformation causes the trough 48 to contact the inner surface of the outer ring 36. When the application of the load to the power transmission spring 44 continues thereafter, the power transmission spring 44 elastically deforms at a location closer to the distal end 47 than the point at which the through 48 contacts the inner surface of the outer ring 36 (see Fig. 6). If any location between the abutting point and the distal end 47 is the point at which the force is applied, similar elastic deformation is caused.

The radius of curvature of the recess 49 of the power transmission spring 44 is smaller in the range from the abutting point to the distal end 47 than in the range from the abutting point to the crest 46.

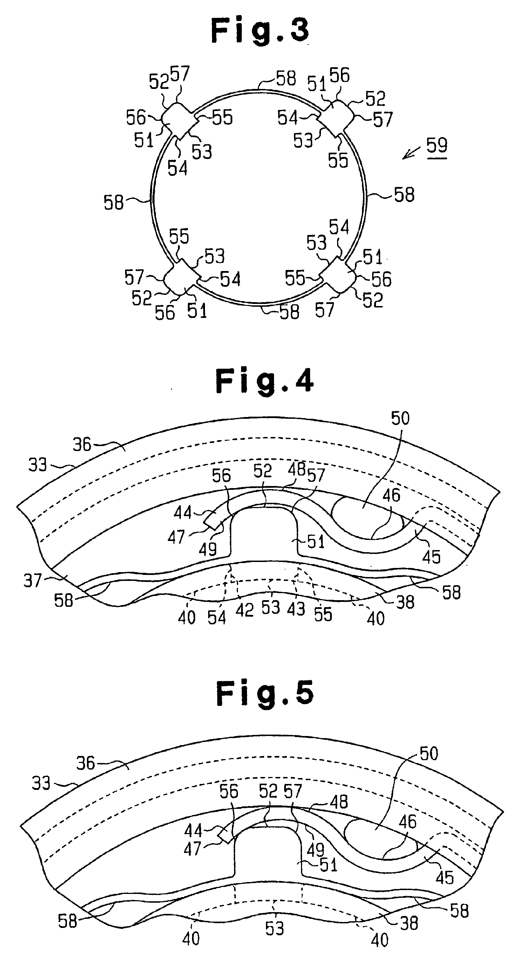

An annular power transmission member 59 of synthetic resin is located between each power transmission spring 44 and the hub 38. As shown in Fig. 3, the power transmission member 59 has a plurality of (four in this embodiment) connecting pieces 51 and a plurality of (four in this embodiment) coupling springs 58, which are alternately arranged and coupled together.

The power transmission member 59 may be made of either a metal material or a resin material. When the power transmission member 59 is made of a synthetic resin material, for example, suitable materials are a fluorine resin, such as polyether ether ketone or polytetrafluoroethylene, phenolalkyl, such as SK resin (trade mark : produced by Sumitomo Chemical Company, Limited), polyamide imide, polyphenylene sulfide containing 50% by weight of polytetrafluoroethylene, a mixture of polyphenylene sulfide, polytetrafluoroethylene and carbon fiber, polyamide, such as nylon 66, acetal copolymer and so forth in consideration of the wear resistance of the connecting pieces 51 and the friction between the connecting pieces 51 and the power transmission spring 44.

The connecting piece 51 has an approximately cubic shape, a top surface 52 facing the power transmission spring 44 is retained in the recess 49 and a bottom surface 53 facing the center portion of the hub 38 is retained in the slot 41. The coupling spring 58, which is a leaf spring, couples a side surface 54 and a side surface 55 of adjoining connecting pieces 51.

The top surface 52 of each connecting piece 51 has a curvature equal to that of the inner surface of the outer ring 36. The center portion of the top surface 52 is formed to expand toward the inner surface of the outer ring 36 more than the end portions of the top surface 52. The radius of curvature of the top surface 52 is greater than that of any portion of the recess 49. The curvature of the bottom surface 53 is equal to that of the inner surface of the inner ring 40. The center portion of the bottom surface 53 in the circumferential direction of the inner ring 40 is closer to the top surface 52 than the end portions of the bottom surface 53.

When each connecting piece 51 is retained in the associated slot 41 (engaged state), the proximal end of the coupling spring 58 abuts against the inner ring 40, which restricts the movement of the connecting piece 51 toward the center of the hub 38. In this state, the bottom surfaces 53 do not protrude toward the center of the hub 38 from the inner surface of the inner ring 40. The distance between the top surface 52 and the bottom surface 53 of each connecting piece 51, i.e., the maximum size of each connecting piece 51 in the radial direction of the hub 38, is less than the distance between the inner surface of the outer ring 36 and the outer surface of the inner ring 40.

The distance between the side surfaces 54 and 55 of each connecting piece 51 is nearly equal to the distance between the side surfaces 42 and 43 of the slot 41, so that the connecting pieces 51, when engaged with the hub 38, are parallel to the side surfaces 42 and 43. That is, each connecting piece 51 is engaged with the hub 38 in a disengageable manner in the radial direction of the hub 38 with no clearance between itself and the slot 41.

First and second corner portions 56 and 57 are formed between the side surfaces 54 and 55 and the top surface 52 of each connecting piece 51. The radiuses of curvature of the corner portions 56 and 57 are smaller than that of any portion of the curved surface of the recess 49. With no load applied at the time of power transmission between the pulley 33 and the hub 38, each power transmission spring 44 is engaged with a connecting piece 51, and the corner portions 56 and 57 abut against the recess 49. When the connecting piece 51 is retained in the recess 49, the top surface 52 does not abut against the power transmission spring 44, but the corner portions 56 and 57 do. In this state, a clearance is formed between the top surface 52 and the power transmission spring 44.

When the pulley 33 and the hub 38 relatively rotate based on the load on the hub 38, the connecting piece 51 slides on the curved surface of the recess 49 when the relative rotation lies within a predetermined angle range, and the connecting piece 51 and the recess 49 relatively move while being engaged with each other. That is, each curved surface that forms a recess 49 is a sliding surface along which a connecting piece 51 slides with respect to a power transmission spring 44 within the predetermined angle range.

When a load exists between the pulley 33 and the hub 38 and as the connecting piece 51 relatively moves in the circumferential direction of the pulley 33, one of the corner portions 56 and 57 of the connecting piece 51 abuts against the sliding surface and presses the power transmission spring 44. The abutting portion, with respect to the sliding surface of the connecting piece 51, is inclined in the circumferential direction of the pulley 33. Therefore, the connecting piece 51 elastically deforms the power transmission spring 44 to push it outward from the center of the pulley 33.

As described above, when the connecting piece 51 is engaged with the slot 41 of the hub 38 and the power transmission spring 44 of the pulley 33, power transmission and relative rotation are possible between the pulley 33.

Fig. 3 shows the power transmission member 59 when the coupling spring 58 is in a natural state. In the natural state, the coupling spring 58 has nearly an arcuate shape. When the power transmission member 59 is in this state and is engaged with the power transmission spring 44 and the hub 38, each connecting piece 51 is pushed into the associated slot 41 toward the center direction of the hub 38 against the elastic force of the coupling spring 58 as shown in Fig. 2(a). At this time, the coupling spring 58 elastically deforms to expand outward in the radial direction of the hub 38. The elastic force of the coupling spring 58 to return to the natural state after assembly is less than the elastic force of the power transmission spring 44 that urges the connecting piece 51 toward the center of the hub 38. Because of the difference between the force of the coupling spring 58 and the elastic force of the power transmission spring 44, therefore, the proximal end of the coupling spring 58 (the link portion between the spring 58 and the connecting piece 51) is pressed against the inner ring 40, which keeps the connecting piece 51 engaged with the hub 38.

Fig. 7 shows the power transmission member 59 with the pulley 33 and the hub 38 disengaged from each other. In the disengaged state, the elastic force of the coupling spring 58 causes the top surfaces 52 of the connecting pieces 51 to contact the inner surface of the outer ring 36. Since the coupling spring 58 has enough force to press the connecting piece 51 against the outer ring 36 at this time, a clearance is formed between the bottom surface 53 and the inner ring 40 of the hub 38, and the connecting piece 51 does not contact the hub 38. Therefore, the coupling spring 58 maintains the state of disengagement of the connecting piece 51 from the pulley 33 and the hub 38.

The following discusses the operation of the power transmission mechanism according to this embodiment.

The power of the engine Eg is transmitted to the pulley 33 via the power transmission belt 34. The power transmitted to the pulley 33 is transmitted to the connecting pieces 51 via the power transmission springs 44, which are secured to the outer ring 36. Further, the power is transmitted to the rotary shaft 17 via the hub 38. When the load on the driven machine becomes greater than the drive torque of the drive source and a load (transmission torque) is produced between the pulley 33 connected to the drive source and the hub 38 connected to the driven machine during such power transmission, relative movement occurs between the power transmission spring 44 and the connecting piece 51, thus causing relative rotation between the pulley 33 and the hub 38.

As the pulley 33 is turned clockwise, as shown in Fig. 4, the hub 38 relatively rotates counterclockwise together with the connecting piece 51. Then, the first corner portion 56 slides along the sliding surface of the recess 49, causing elastic deformation of the power transmission spring 44 in the radial direction of the pulley 33. At this time, the second corner portion 57, which was abutted on the sliding surface of the recess 49 moves away from the sliding surface and the first corner portion 56 abuts the sliding surface. Under a normal load, power transmission is carried out in this state.

As the angle of relative rotation of the pulley 33 and the hub 38 increases, the abutting point of the first corner portion 56 on the sliding surface moves toward the distal end 47 of the power transmission spring 44. The inclination angle of the sliding surface with respect to the pulley 33 is larger toward the distal end 47. As the abutting point moves toward the distal end 47, therefore, the amount of elastic deformation (the amount of displacement of the distal end 47 with the proximal end 45 as a supporting point) increases.

When the load increases, due to an abnormality in the compressor C, and the angle of relative rotation of the pulley 33 and the hub 38 increases, the distal end 47 of the power transmission spring 44 is elastically deformed further in the radial direction of the pulley 33, and the proximal end 45 is the supporting point. As a result, the trough 48 abuts against the inner surface of the outer ring 36 as shown in Fig. 5.

When the load increases further, in addition to such elastic deformation, with the proximal end 45 as a supporting point, or first elastic deformation, a second elastic deformation of the spring 44 occurs when the trough 48 abuts against the inner surface of the outer ring 36 and forms a supporting point. The second elastic deformation is caused as the abutting point between the connecting piece 51 and the sliding surface of the recess 49 is applied closer to the distal end 47 than the abutting point between of the trough 48 and the outer ring 36. That is, the distance between the point of force application and the supporting point (the abutting point between the trough 48 and the outer ring 36) is sufficiently shorter than that in the case of the first elastic deformation. When the second elastic deformation starts, therefore, the force of the power transmission spring 44 on the connecting piece 51 increases dramatically, making it hard to increase the angle of relative rotation between the pulley 33 and the hub 38.

When the angle of relative rotation between the pulley 33 and the hub 38 nevertheless increases against the force based on the first and second elastic deformations, the first corner portion 56 moves away from the sliding surface of the recess 49 and the distal end 47 abuts against the top surface 52 and starts sliding, as shown in Fig. 6. When the angle of relative rotation further increases, i.e., when the load between the pulley 33 and the hub 38 exceeds a predetermined value, the connecting piece 51 eventually climbs over the sliding surface and is disengaged from the power transmission spring 44.

As shown in Fig. 7, the disengaged connecting piece 51 moves outward in the radial direction from the center of the hub 38 due to the force of the coupling spring 58. Consequently, the connecting piece 51 is disengaged from the slot 41 of the hub 38 and the engagement of the connecting piece 51 with the hub 38 is released. The force of the coupling spring 58 causes the connecting piece 51 to abut against the inner surface of the outer ring 36 and to rotate together with the pulley 33. Because a clearance exists between the connecting piece 51 and the hub 38, the rotation of the pulley 33 is not transmitted to the hub 38. Accordingly, the power transmission between the pulley 33 and the hub 38 is discontinued.

Variation in load (torque variation) always occurs between the pulley 33 and the hub 38 due to variation in the compression reactive force of the compressor C and the pulsation of the drive shaft of the engine Eg. Under such a circumstances, the clockwise and counterclockwise relative rotations of the hub 38 to the pulley 33 are alternately repeated.

With the first elastic deformation alone occurs, as shown in Fig. 4, the point of force application of the elastic deformation repeatedly reciprocates on the sliding surface of the recess 49 in the rotational direction of the pulley 33. Therefore, the distance between the point of force application and the supporting point (the proximal end 45) always changes. This change in distance normally results in a change of the elastic coefficient of the power transmission spring 44. The continuous change in elastic coefficient suppresses resonance of the pulley 33 and the hub 38.

Even with the first and second elastic deformations occurring, as shown in Fig. 5, the distance between the supporting point (the abutting point of the trough 48 to the outer ring 36) and the point of force application normally changes. Therefore, the elastic coefficient continuously changes, which suppresses resonance. That is, when the connecting piece 51 is engaged with the power transmission spring 44 and the pulley 33 and the hub 38 are in a power transmission state, resonance of the pulley 33 and the hub 38 is suppressed.

The connecting piece 51 repeatedly reciprocates along the recess 49. The friction produced during the reciprocal movement attenuates the relative vibration of the pulley 33 and the hub 38, which reduces the amplitude of variation in the load.

Further, the rubber damper 50 absorbs vibration with the proximal end 45 of the power transmission spring 44 as a supporting point. Therefore, the relative vibration of the pulley 33 and the hub 38 is attenuated, which reduces the amplitude of load variation.

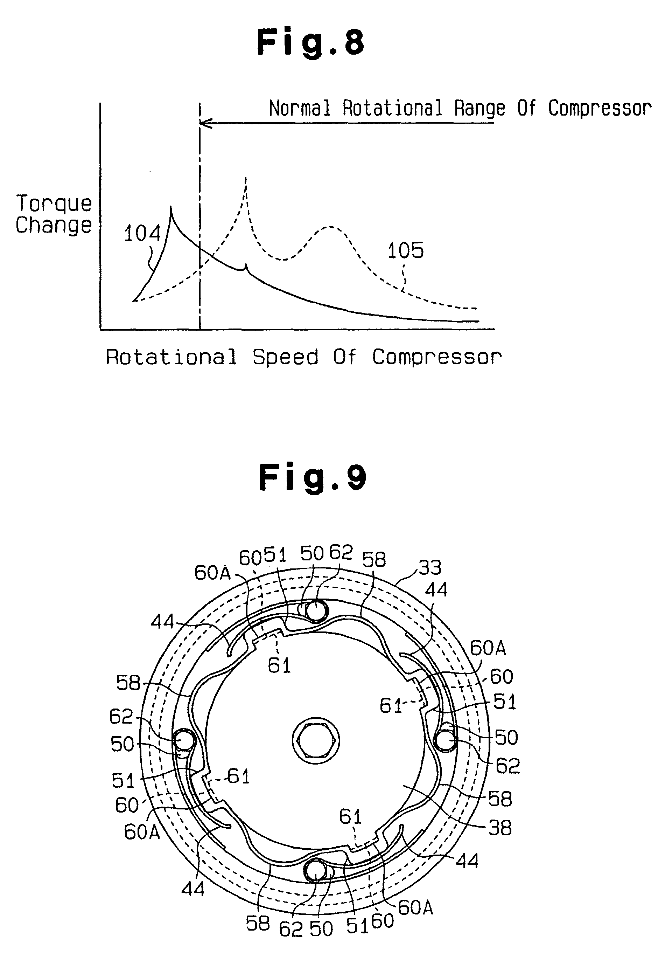

Fig. 8 is a graph illustrating the relationship between the magnitude of torque variation between the pulley 33 and the hub 38 and the rotational speed of the compressor C. A solid line 104 indicates the characteristics of torque variation when the power transmission mechanism 31 of this embodiment is used. A broken line 105 indicates the torque variation characteristics when the power transmission mechanism is not used in a comparative example in which the relative rotation of the pulley 33 and the hub 38 does not occur during power transmission.

In the comparative example, as apparent from the broken line 105, a peak in torque variation occurs in the normal rotational range of the compressor C. In the present embodiment, which is indicated by the solid line 104, by way of contrast, the peak in the torque variation is shifted out of the normal rotational range of the compressor C and the torque variation is reduced over almost the entire normal rotational range as compared with the comparative example. Further, the value of the maximum peak in torque variation is also reduced. This indicates that the power transmission mechanism 31 of the present embodiment, which is coupled in such a way that the recess 49 and the connecting piece 51 are movable relative to each other while sliding, suitably reduces the torque variation produced between the compressor C and the external drive source.

The present embodiment can provide the following effects.

Because the pulley 33 and the hub 38 are coupled to be relatively rotatable within a predetermined angle range during power transmission, the power transmission mechanism 31 can transmit power while limiting torque variation produced between the pulley 33 and the hub 38 to a predetermined value. For example, while the torque variation caused by a change in the compression reactive force of the compressor C is transmitted directly to the hub 38, the torque variation that is transmitted to the pulley 33 from the hub 38 is reduced by the relative rotation of the pulley 33 and the hub 38.

The sliding of the connecting piece 51 and the power transmission spring 44 takes place against frictional resistance between the connecting piece 51 and the power transmission spring 44. This frictional resistance effectively reduces the torque variation. That is, the torque variation is reduced surely by the frictional resistance produced between the connecting piece 51 and the power transmission spring 44 in addition to the reduction of the torque variation by the elastic deformation of the elastic member 44.

The torque variation is also reduced by the rubber damper 50.

The portion of the connecting piece 51 that abuts against the sliding surface of the recess 49 moves with respect to the sliding surface of the recess 49. Therefore, the connecting piece 51 does not continue sliding at the same position of the recess 49, and uneven wear of the sliding surface of the recess 49 is prevented.

The portion where the power transmission spring 44 and the connecting piece 51 abut against on the other moves, the elastic coefficient of the power transmission spring 44 changes. This suppresses the resonance in the relative rotational vibration of the pulley 33 and the hub 38.

When the trough 48 abuts against the inner surface of the outer ring 36, the supporting point of the elastic deformation of the power transmission spring 44 moves from the proximal end 45 to the point where the trough 48 and the outer ring 36 contact one another. That is, when the angle of relative rotation of the pulley 33 and the hub 38 reaches a predetermined value, the amount of change in the elastic coefficient of the power transmission spring 44 with respect to a unit increase in the angle of relative rotation increases. This suppresses resonance in the relative rotation of the pulley 33 and the hub 38 more effectively and prevents power transmission between the pulley 33 and the hub 38 from being shut off in a relatively low torque state.

By changing the magnitude of the frictional resistance between the connecting piece 51 and the power transmission spring 44, the action of reducing the torque variation can be adjusted easily. Another component for reducing the torque variation is not needed, and the development costs are saved. The magnitude of the frictional resistance can be changed by, for example, adhering or coating a material with a low friction material, such as a fluorine resin, applying a lubricant on the sliding surface of the recess 49, causing the power transmission spring 44 and the connecting piece 51 to make planar contact to adjust the area, or by adjusting the force of the power transmission spring 44 on the connecting piece 51. Reducing the frictional resistance between the connecting piece 51 and the power transmission spring 44 improves sliding between the connecting piece 51 and the power transmission spring 44 by reducing friction.

As the angle of relative rotation of the pulley 33 and the hub 38 increases and the point where the connecting piece 51 and the sliding surface of the recess 49 abut against another comes closer to the distal end 47, the load of the relative rotation of the pulley 33 and the hub 38 becomes greater. To release the engagement of the connecting piece 51 with the power transmission spring 44, therefore, force of a predetermined value or greater is needed. It is therefore possible to prevent the shut-off of power transmission in a state of a low power transmission load.

The sliding surface of the recess 49 is nearly arcuate. As the abutting point comes closer to the distal end 47, therefore, the rate of increase in the load between the pulley 33 and the hub 38 (the amount of an increase in load per angle of relative rotation) increases gradually and smoothly. That is, because the sliding surface is curved, the connecting piece 51 can be moved continuously to the position at which engagement is released. It is therefore possible to reduce shock until the power transmission is shut off.

The sliding surface of the recess 49 is curved. As compared with the case where the sliding surface of the recess 49 is formed by connecting plural planar surfaces different inclination angles to the circumferential direction of the pulley 33, for example, the sliding surface of this embodiment involves only a simple manufacturing process. Since the connecting piece 51 can slide on the sliding surface smoothly, smooth relative rotation of the pulley 33 and the hub 38, and eventually, a variation in transmission torque is suppressed effectively.

The sliding surface of the recess 49 has a smaller radius of curvature on the distal end 47 than on the proximal end 45. Therefore, the connecting piece 51 is not disengaged from the power transmission spring 44 when the load is relatively low. This prevents a power transmission cut-off in a low load state.

When the connecting piece 51 is engaged with the recess 49, at least one of the corner portions 56 and 57 contacts the power transmission spring 44 while the top surface 52 does not contact the power transmission spring 44. Even when the connecting piece 51 is worn out in this state, the top surface 52 does not wear out, and the amount of elastic deformation does not change when the connecting piece 51 is disengaged from the power transmission spring 44. Therefore, the value of the load when power transmission between the pulley 33 and the hub 38 is shut off is stable, the life of the product is long, and labor, such as maintenance, is reduced.

When the load between the pulley 33 and the hub 38 exceeds a predetermined value, power transmission between the pulley 33 and the hub 38 is shut off. Therefore, the engine Eg is protected against an excess load.

The connecting piece 51 is not disengaged from the power transmission spring 44 while moving on the sliding surface. Therefore, the engagement of the connecting piece 51 with the power transmission spring 44 can be released only when the load exceeds a predetermined value.

When the connecting piece 51 is disengaged from both the pulley 33 and the hub 38, power transmission is shut off reliably.

When a connecting piece 51 has been separated from the power transmission spring 44, it is separated from the hub 38 by the force of the coupling spring 58. It is therefore possible to reliably stop power transmission.

Each connecting piece 51 is integral with the coupling spring 58. Accordingly, the connecting pieces 51 are not dispersed during assembly and after being separated from the pulley 33 and the hub 38 and are thus easy to handle.

A plurality of coupling springs 58 are coupled to a plurality of connecting pieces 51 to form the closed annular power transmission member 59. This improves the force of each connecting piece 51 compared to a case where the power transmission member is formed by independent springs and connecting pieces 51.

Each connecting piece 51 is urged outward in the radial direction from the center of the hub 38 by the associated coupling spring 58. Each connecting piece 51 is also urged outward in the radial direction by the centrifugal force of the rotating hub 38 at the time of disengagement from the hub 38. Therefore, each connecting piece 51 is reliably separated from the hub 38. As a result, the disengagement of the pulley 33 from the hub 38 is reliable.

Since the coupling springs 58 prevent the connecting pieces 51 from being reengaged with the power transmission springs 44 and the hub 38, the disengagement of power transmission is reliable. Further, the connecting pieces 51 that are separated from the power transmission spring 44 and the hub 38 are prevented from moving between the outer ring 36 and the hub 38. This inhibits abnormal sounds and damages to the components. The top surface 52 of each connecting piece 51 has a planar contact surface for contacting with the inner surface of the outer ring 36 to make an integral connection with the pulley 33. The integral connection is therefore stable.

The recess 49 is supported on the pulley 33 via the power transmission spring 44, which is an elastic member, and is constructed such that a change in its position (deformation of the sliding surface) with respect to the pulley 33 can occur due to the elastic deformation of the power transmission spring 44. That is, the elastic members 44 are arranged in the power transmission path and are power transmission members. The number of power transmission members is thus reduced compared with a structure where, for example, the elastic members are not arranged in the power transmission path.

The sliding surface of the recess 49 against which the connecting piece 51 abuts is provided on the power transmission spring 44 itself. That is, since the member that is provided with the sliding surface and the member that applies elastic force to the former sliding surface formed by a common member, the number of components is reduced and the structure is simple.

The recess 49 deforms in the radial direction of the pulley 33. When the connecting piece 51 moves in the radial direction of the hub 38 and disengages, the hub 38 disengages with the connecting piece 51. As compared with a case where the connecting piece disengages in the axial direction of the rotary shaft 17, therefore, it is unnecessary to provide another member for moving the connecting piece 51 in the axial direction or space for accommodating that member. This limits the size of the pulley 33 and the hub 38. Because space in the axial direction of the rotary shaft 17 is restricted in the engine compartment where the compressor C is located, this embodiment is particularly beneficial. Further, the disengagement of the connecting piece 51 in the radial direction of the rotary shaft 17 is not accompanied by generation of a reactive force in the axial direction of the rotary shaft 17. It is therefore possible to limit the generation of force in the axial direction.

The coupling spring 58 both disengages the connecting piece 51 from the hub 38 and connects the pulley 33 and the connecting piece 51. Therefore, the number of parts is reduced and the structure is simple.

The power transmission member 59 is integrally formed of a synthetic resin. This facilitates production by injection molding or the like, cost reduction and weight reduction. The weight reduction reduces the influence of centrifugal force on the power transmission springs 44 engaged while they are with the pulley 33 and the hub 38.

When the power transmission spring 44 is harder than the connecting piece 51, the connecting piece 51 wears. After the power transmission member 59 wears, replacement, if necessary, is easy.

The coupling spring 58 is a leaf spring. This increases the degree of design freedom, thus facilitating the design and contributing to cost reduction. In a case where the coupling spring 58 is made of a resin, mass production by injection molding or the like is easier and the power transmission mechanism 31 is lighter.

When the connecting piece 51 is engaged with the hub 38, the bottom surface 53 of the connecting piece 51 does not protrude toward the center of the hub 38 from the inner surface of the inner ring 40. In a case where a component is provided outside the boss 35 in the radial direction, therefore, interference is avoided.

The magnitude of the load that causes power transmission between the pulley 33 and the hub 38 to be cut off can be adjusted relatively easily by changing the shapes of the power transmission spring 44 and the power transmission member 59. It is therefore possible to reduce the cost of developing products. With regard to the shape of the power transmission spring 44, for example, the size of the sliding surface from the distal end 47 of the power transmission spring 44 to the supporting point in the second elastic deformation may be changed. Further, the size of the power transmission spring 44 (spring width) in the axial direction of the rotary shaft 17, the thickness of the spring member or the like may be changed. With regard to the shape of the power transmission spring 44, for example, the size of the connecting piece 51 in the radial direction of the pulley 33, the size of the coupling spring 58 (spring width) in the axial direction of the rotary shaft 17, the thickness of the coupling spring 58 or the like may be changed.

This embodiment may be modified as follows.

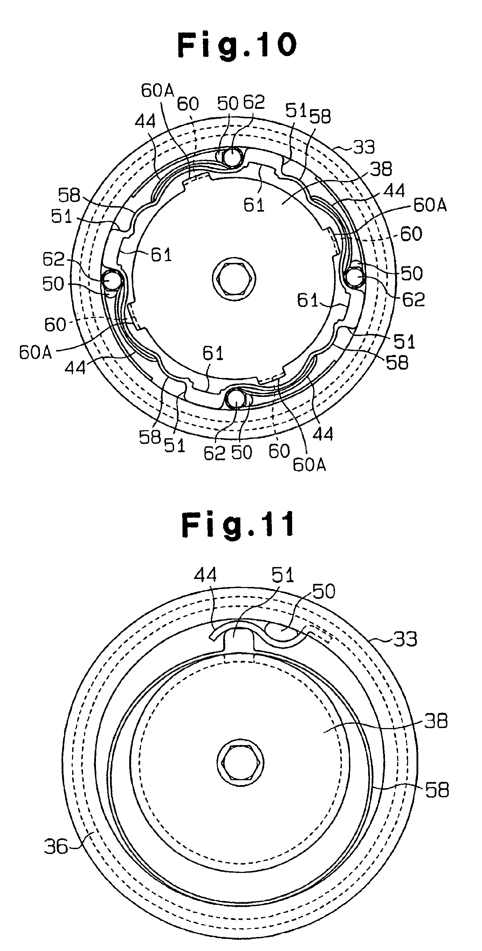

As in a second embodiment shown in Figs. 9 and 10, a plurality of engagement projections 60 may be provided on the hub 38 and may be engaged with the recesses 61 formed in the associated connecting pieces 51. This eliminates the need for the slots in the hub 38 as in the embodiment in Fig. 2(a), so that the strength of the hub 38, to which relatively large force is applied, can be increased. Each engagement projection 60 is provided with a restriction piece 60A which extends in the radial direction of the hub 38. Each restriction piece 60A prevents the associated connecting piece 51 from moving considerably in the axial direction of the hub 38 during power transmission.

When the engagement of each connecting piece 51 with the hub 38 is released, as shown in Fig. 10, each connecting piece 51 abuts against a mount portion of the power transmission spring 44 (near an attaching screw 62 in Fig. 10). Accordingly, each connecting piece 51 is secured to the pulley 33 in a stable state. In the disengaged state, as the distal end of each power transmission spring 44 presses the coupling spring 58 inward in the radial direction, the holding force of each connecting piece 51 on the pulley 33 is increased.

The number of connecting pieces 51 is not limited to four, but may be one, for example. When the number of connecting pieces 51 is one as in a third embodiment shown in Fig. 11, abutment of the coupling spring 58 against the outer ring 36 applies force to the connecting piece 51. The power transmitted to the hub 38 from the pulley 33 can be adjusted by changing the number of connecting pieces 51. Reducing the number of connecting pieces decreases the numbers of power transmission springs 44 and rubber dampers 50, thus facilitating assembly.

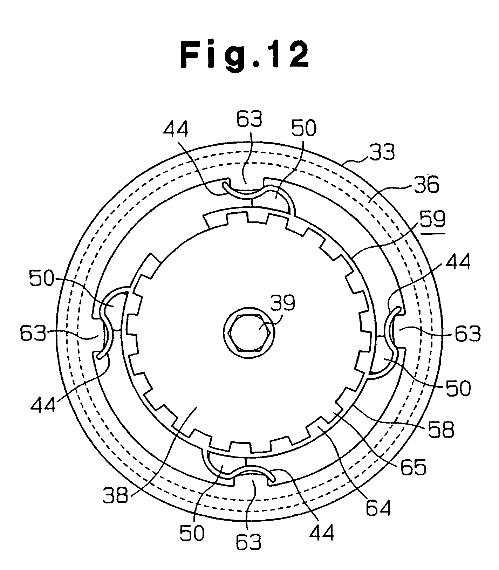

In a fourth embodiment shown in Fig. 12, the power transmission springs 44 are provided on the power transmission member 59 on the hub 38 and engagement projections 63 are formed on the pulley 33. The power transmission member 59 is not annular and a part thereof is removed. The power transmission springs 44 are engaged with the engagement projections 63. The coupling spring 58 and the hub 38 are provided with a plurality of inner teeth 64 and outer teeth 65, respectively, the teeth having a rectangular cross-section. The inner teeth 64 and outer teeth 65 extend radially, and the bolt 39 is at the center. The inner teeth 64 and outer teeth 65 engage with each other. When the angle of relative rotation of the pulley 33 and the hub 38 increases and the engagement of the engagement projections 63 with the power transmission springs 44 is released, the teeth 64 and 65 disengage.

When the connecting pieces 51 are disengaged from the hub 38 and abut against the pulley 33 (see Fig. 7), there may be no elastic energy in the coupling spring 58. That is, the coupling spring 58 may not press the connecting piece 51 against the pulley 33. When the connecting piece 51 is disengaged from the hub 38, the connecting piece 51 may not be rotated together with the pulley 33. In other words, in the disengaged state, the power transmission member 59 may not be integral with either the pulley 33 or the hub 38 and may be free. In this state too, power transmission between the pulley 33 and the hub 38 is shut off as long as the connecting piece 51 is disengaged from the power transmission spring 44 and the slot 41.

The power transmission member may be urged radially inward.

The power transmission member 59 is not limited to a perfect annular shape but may be annular with a part cut away, as shown in Fig. 12.

One of the connecting piece 51 and the coupling spring 58 may be made of metal and the other of a synthetic resin. The connecting piece 51 and the coupling spring 58 may be made of metal.

The connecting piece 51 may be provided with an engagement recess and the power transmission spring 44 may be provided with an engagement projection so that the engagement recess of the connecting piece 51 is engaged with the engagement projection of the power transmission spring 44. In this case, the pulley 33 becomes the second rotary body and the hub 38 becomes the first rotary body.

The recess 49 and the connecting piece 51 may be constructed in such a way that their positions can be changed with respect to the pulley 33 and the hub 38 with which they are associated. In this case, an elastic member for the recess 49 and an elastic member for the connecting piece 51 are provided.

A change in the position of the engagement portion is not limited to deformation of the engagement portion itself. For example, the position change includes rotation or movement of the engagement portion on the associated rotary body.

The use of the power transmission mechanisms according to the embodiments illustrated in Figs. 1 to 12 is not limited to power transmission between the engine Eg and an air-conditioning compressor, but they may be used for power transmission between, for example, the engine Eg and an auxiliary device other than an air-conditioning compressor (e.g., a hydraulic pump of a power steering unit, a mechanical supercharger, a cooling fan of a radiator or the like). The present invention is not limited to the power transmission path of a vehicle, but may be used in the power transmission path of, for example, a machine tool between a drive source and a working tool.

## Claims

1. A power transmission mechanism being **characterized by**:
a first rotary body having an engagement recess;
a second rotary body which is coaxial to said first rotary body and has an engagement projection, wherein the position of at least one of said engagement recess and said engagement projection can change with respect to the associated rotary body;
an elastic member which elastically deforms in accordance with force based on a transmission torque during power transmission between said first rotary body and said second rotary body, wherein elastic deformation of said elastic member permits the position of at least one of said engagement recess and said engagement projection to be changed, wherein sliding of said engagement projection in said engagement recess permits relative rotation of the rotary bodies within a predetermined angle range.

2. The power transmission mechanism according to claim 1, wherein at least one of said engagement recess and said engagement projection is provided on one of said first and second rotary bodies via said elastic member, and elastic deformation of said elastic member causes at least one of said engagement recess and said engagement projection to be deformed or rotated with respect to that rotary body or moved with respect to the other.

3. The power transmission mechanism according to claim 1, wherein an abutting portion of said engagement recess and said engagement projection is movable.

4. The power transmission mechanism according to claim 1, wherein at least one of said engagement recess and said engagement projection elastically deforms in a radial direction of the rotary bodies.

5. The power transmission mechanism according to any one of claims 1 to 4, wherein at least one of said engagement recess and said engagement projection has a sliding surface on which the other engagement portion slides, wherein said sliding surface is inclined with respect to a circumferential direction of the rotary bodies, and as an angle of relative rotation of the rotary bodies within said predetermined angle range increases, a force between said engagement recess and said engagement projection increases.

6. The power transmission mechanism according to claim 5, wherein said sliding surface is a curved surface.

7. The power transmission mechanism according to any one of claims 1 to 6, wherein an elastic coefficient of said elastic member is changed in accordance with the magnitude of an angle of relative rotation of the rotary bodies within said predetermined angle range during power transmission.

8. The power transmission mechanism according to claim 7, wherein at least one of said engagement recess and said engagement projection is provided on one of said first and second rotary bodies via said elastic member and can be deformed, rotated or moved with respect to that rotary body by elastic deformation of said elastic member, and as an abutting portion of said engagement recess and said engagement projection is moved, said elastic coefficient of said elastic member is changed.

9. The power transmission mechanism according to claim 8, wherein said elastic member is a leaf spring of which at least one end is secured to one of said first and second rotary bodies and at least one of said engagement recess and said engagement projection is formed by bending said leaf spring.

10. The power transmission mechanism according to claim 9, wherein said elastic coefficient of said leaf spring is changed by changing the location of said abutting portion of said engagement recess and said engagement projection, wherein the location is a supporting point, when said angle of relative rotation of said first and second rotary bodies exceeds a predetermined value.

11. The power transmission mechanism according to claim 10, wherein said location of said supporting point is changed as said leaf spring abuts against one of said first and second rotary bodies at a position other than a secured portion of that rotary body.

12. The power transmission mechanism according to any one of claims 9 to 11, wherein rubber is located between said leaf spring and one of said first and second rotary bodies which securely supports said leaf spring and said rubber is compressed and deformed between said leaf spring and said one of said first and second rotary bodies by elastic deformation of said leaf spring.

13. The power transmission mechanism according to any one of claims 1 to 12, wherein a coat for reducing friction between said engagement recess and said engagement projection is formed on a sliding surface of at least one of said engagement recess and said engagement projection.

14. The power transmission mechanism according to any one of claims 1 to 13, wherein when said transmission torque becomes excessively large, said engagement projection climbs over a sliding surface in said engagement recess and is disengaged from said engagement recess, thereby disengaging said engagement recess and said engagement projection.

15. The power transmission mechanism according to claim 14, wherein said engagement projection has a corner portion facing said engagement recess.
